# EUROPÄISCHE PATENTSCHRIFT

(11) **EP 0 785 412 B1**
(45) Veröffentlichungstag und Bekanntmachung des Hinweises auf die Patenterteilung: **07.11.2001**
(21) Anmeldenummer: 97100505.3
(22) Anmeldetag: 15.01.1997
(51) Int. Cl.: G01C 15/00, G01C 9/26

(54) **Laser-Nivelliereinrichtung**
Laser levelling apparatus
Dispositif de nivellement à laser

(30) Priorität: 20.01.1996 DE 29600964 U
(43) Veröffentlichungstag der Anmeldung: 23.07.1997
(73) Patentinhaber: Stabila-Messgeräte Gustav Ullrich GmbH & Co.KG, 76855 Annweiler am Trifels (DE)
(72) Erfinder: von Wedemeyer, Peter, Dipl.-Ing. (FH), 76855 Annweiler am Trifels (DE)
(74) Vertreter: Patentanwälte Möll und Bitterich

(56) Entgegenhaltungen:
- EP-A- 0 401 815
- EP-A- 0 545 321
- DE-U- 9 320 024
- US-A- 753 149

## Beschreibung

Die Erfindung betrifft Nivelliereinrichtungen gemäß dem Oberbegriff des Anspruchs 1.

Aus der US 753 149 ist eine Wasserwaage bekannt mit einem langgestreckten parallelepipedischen Körper, darin befestigten Libellen und zwei Endkappen. An den Endkappen sind Kimme und Korn einer Visiereinrichtung angelenkt. Im Ruhezustand sind Kimme und Korn in entsprechende Aussparungen in den Endkappen versenkt. Zum Gebrauch werden sie aufgeklappt. Mit Hilfe dieser Visiereinrichtung sollen Winkelmessungen durchgeführt werden. Diese Aufgabe wird heute jedoch mit weitaus besseren Geräten gelöst, insbesondere mit Laserstrahl-Theodoliten.

Bekannt und handelsüblich sind auch Wasserwaagen mit eingebautem Laserstrahlgenerator. Die Stärke des Laserstrahls ist beschränkt, um Augenverletzungen zu verhindern. Dies hat zur Folge, daß bei großen Entfernungen und/oder großer Umgebungshelligkeit der Projektionspunkt des Laserstrahls nicht mehr zu erkennen ist. Als Abhilfe werden üblicherweise reflektierende Spezialfolien an den Stellen angebracht, an denen der Laserstrahl auftreffen müßte. Bei größeren Projektionsentfernungen ist es jedoch mit den herkömmlichen Laserwasserwaagen fast nicht möglich, die Reflektionsfolie zu "treffen".

Wie die DE-U 93 20 024 offenbart, kann der Laserstrahlgenerator zusammen mit Laserstrahloptik, der Ansteuerelektronik, dem Ein-Aus-Schalter und dem Batteriefach zu einem kompletten Lasermodul zusammengefaßt werden. Dabei sitzt der Ein-Aus-Schalter unmittelbar neben der Laseroptik in der Stirnkappe des Moduls, die später auch eine der Endkappen der Laserwasserwaage bildet. Diese Anordnung ist zwar sehr kompakt, es besteht jedoch die Gefahr, daß der Benutzer beim Versuch, den Ein-Aus-Schalter zu betätigen, die Laseroptik berührt. Die Laseroptik ist ungeschützt gegen Verschmutzung und am Schalter ist nicht sofort erkennbar, ob der Laser eingeschaltet ist.

Der vorliegenden Erfindung liegt die Aufgabe zugrunde, die eingangs beschriebene, mit Kimme und Korn ausgerüstete Wasserwaage zu einer Laserwasserwaage weiterzuentwickeln, die einfach und preiswert herzustellen, sicher zu bedienen und gegen Verschmutzungen oder Beschädigungen der Laseroptik geschützt ist.

Diese Aufgabe wird gelöst durch eine Nivelliereinrichtung mit den Merkmalen des Anspruchs 1.

Bei der vorliegenden Erfindung muß das Korn in seine für das Visieren korrekte Position gebracht werden, damit der Laserstrahlgenerator eingeschaltet wird. Der Benutzer kann auf diese Weise sofort feststellen, ob die Laserwasserwaage in Betrieb ist und Batteriestrom verbraucht oder nicht. Sobald der Laserstrahl abgeschaltet wird, deckt das Korn die Laseroptik ab, so daß diese gegen Verschmutzung und Beschädigung geschützt ist. Dank der Kombination von Korn und Ein-Aus-Schalter ist die Zahl der beweglichen Teile reduziert, was Produktion und Montage vereinfacht. Dank der senkrecht geöffneten Visierhilfe bleibt der Laser-Projektionspunkt stets im Blickfeld, obwohl der Laserstrahl tiefer liegt als die optische Visierlinie.

Vorzugsweise sind Kimme und/oder Korn als Schieber ausgebildet. Schieber lassen sich einfacher und preiswerter produzieren und montieren als Klappen gemäß dem eingangs beschriebenen Stand der Technik.

Gemäß einer Ausgestaltung der Erfindung gibt der Kornschieber bzw. der Kimmeschieber im ganz ausgefahrenen Zustand das Batteriefach frei. Dadurch entfällt ein eigener Batteriefachverschluß.

Vorteilhafterweise sind Kimme und/oder Korn in die Endkappen des Wasserwaagengehäuses integriert. Auch hierdurch ergibt sich eine vereinfachte Produktion und Montage.

Es besteht jedoch auch die Möglichkeit, Kimme und/oder Korn in das Lasermodul zu integrieren. Dieses Ziel läßt sich auch dadurch erreichen, daß das Lasermodul in eine Endkappe integriert wird.

Mögliche Realisierungen der senkrecht geöffneten Visierhilfe sind ein senkrechter Spalt oder ein senkrechter Faden, der in einem entsprechenden Rahmen aufgespannt wird. Noch besser ist die Verwendung eines parallelen Doppelfadens, aufgespannt in einem entsprechend großen Rahmen, da diese Version das größte Blickfeld ermöglicht.

Vorzugsweise sind an der Visierhilfe Höhenmarkierungen angebracht. Dadurch wird der Tatsache Rechnung getragen, daß der Laserstrahl tiefer liegt als die optische Visierlinie. Mit Hilfe der Höhenmarkierungen sind sogar einfache Entfernungsabschätzungen möglich.

Zusätzlich kann ein Filter, wie es von Lasersichtbrillen bekannt ist, eingesetzt werden, vorzugsweise an der Kimme, um die Sichtbarkeit des Laserpunktes zu verbessern.

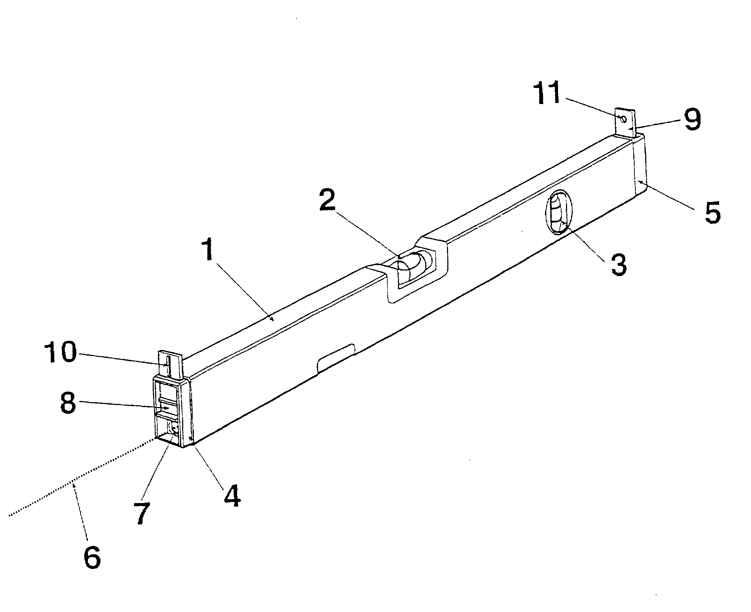

Anhand der Zeichnung soll die Erfindung in Form eines Ausführungsbeispiels erläutert werden.

Man erkennt ein parallelepipedisches, langgestrecktes Gehäuse 1, in dem eine Horizontal-Libelle 2 und eine Vertikal-Libelle 3 in an sich bekannter Weise montiert sind. Endkappen 4, 5 schließen das Gehäuse 1 vorne und hinten ab.

In die beiden Endkappen 4, 5 sind Schieber 8, 9 integriert. Diese Schieber 8, 9 tragen eine Kimme 11 und ein Korn 10 und bilden so eine Visiereinrichtung.

Der das Korn 10 tragende Schieber 8 ist gleichzeitig Ein-Aus-Schalter für einen im Gehäuse 1 eingebauten Laserstrahlgenerator, der einen die Optik 7 verlassenden Laserstrahl 6 erzeugt. Außerdem ist der Schieber 8 so konstruiert, daß er im abgesenkten Zustand die Laseroptik 7 abdeckt und so gegen Schmutz und Beschädigungen schützt.

Wird der Kornschieber 8 über die in der Zeichnung dargestellte Visierposition hinaus nach oben geschoben, gibt er das dahinter liegende Batteriefach des Lasermoduls frei und die Batterien können ausgetauscht werden. Ist das Batteriefach in die andere Endkappe 5 integriert, läßt sich derselbe Effekt mit Hilfe des Kimmeschiebers 9 erreichen.

Da der Laserstrahl 6 tiefer liegt als die optische Visierlinie, wäre der Projektionspunkt des Laserstrahls 6 durch eine herkömmliche Visiereinrichtung nicht zu erkennen. Im vorliegenden Fall wurde deshalb das Korn als senkrechter Spalt 10 ausgebildet, so daß auch eine nach unten geneigte Visierlinie möglich ist. Außerdem ist so das Blickfeld größer und die Reflexionsfolie ist leichter zu finden. Die Wasserwaage darf ja nicht aus ihrer waagerechten Lage gebracht werden. An der dem Auge zugewandten Seite des Spaltes 10 können Höhenmarkierungen angebracht sein, mit deren Hilfe sogar einfache Entfernungsmessungen möglich sind.

Anstelle des senkrechten Spaltes 10 können als Visierhilfe ein senkrechter Faden oder ein paralleler Doppelfaden verwendet werden.

Dank der Visiereinrichtung 10, 11 läßt sich die Laserwasserwaage gerade bei großer Umgebungshelligkeit und/oder bei großen Projektionsentfernungen, wenn der Laserpunkt nicht mehr mit bloßem Auge zu erkennen ist, mit großer Sicherheit auf ein Projektionsziel, beispielsweise eine reflektierende Folie, ausrichten. Der Laserprojektionspunkt befindet sich immer im Sichtbereich der Visiereinrichtung und kann auch unter schlechten Bedingungen ausreichend sicher erkannt werden. Da die Genauigkeit der Nivelliereinrichtung durch den einjustierten Laserstrahl gewährleistet ist, reicht die unjustierte und deshalb mit geringer Genauigkeit behaftete Visiereinrichtung aus, da mit Hilfe der Visiereinrichtung lediglich die Reflexionsfolie gefunden werden muß.

## Patentansprüche

1. Nivelliereinrichtung, umfassend
- ein langgestrecktes Gehäuse (1),
- wenigstens eine Libelle (2, 3) im Gehäuse (1) und
- eine Visiereinrichtung mit Kimme (9, 11) und Korn (8, 10),
- Kimme (9, 11) und Korn (8, 10) sind an den Enden des Gehäuses (1) beweglich angebracht,
**gekennzeichnet durch** die Merkmale:
- im Gehäuse (1) ist ein Lasermodul untergebracht, umfassend
-- einen Laserstrahlgenerator,
-- eine Laserstrahloptik (7) und
-- eine Ansteuerelektronik,
- es sind ein Ein-Aus-Schalter und ein Batteriefach vorgesehen,
- das Korn (8, 10)
-- deckt im eingefahrenen Zustand die Laseroptik (7) ab und
-- ist gleichzeitig Ein-Aus-Schalter,
- Kimme (9, 11) oder Korn (8, 10) sind als langgestreckte senkrechte Visierhilfe ausgebildet.

2. Nivelliereinrichtung nach Anspruch 1, **gekennzeichnet durch** die Merkmale:
- Kimme (11) und/oder Korn (10) sind als Schieber (8, 9) ausgebildet.

3. Nivelliereinrichtung nach Anspruch 2, **gekennzeichnet durch** das Merkmal:
- der Kornschieber (8) gibt im ganz ausgefahrenen Zustand das Batteriefach frei.

4. Nivelliereinrichtung nach Anspruch 2, **gekennzeichnet durch** das Merkmal:
- der Kimmeschieber (9) gibt im ganz ausgefahrenen Zustand das Batteriefach frei.

5. Nivelliereinrichtung nach einem der Ansprüche 1 bis 4, gekennbeichnet durch das Merkmal:
- Kimme (11) und/oder Korn (10) sind in Endkappen (4, 5) des Gehäuses (1) integriert.

6. Nivelliereinrichtung nach einem der Ansprüche 1 bis 4, **gekennzeichnet durch** das Merkmal:
- Kimme (11) und/oder Korn (10) ist in das Lasermodul integriert.

7. Nivelliereinrichtung nach einem der Ansprüche 1 bis 6, **gekennzeichnet durch** das Merkmal:
- Die Visierhilfe ist **durch** einen senkrechten Spalt (10) realisiert.

8. Nivelliereinrichtung nach einem der Ansprüche 1 bis 6, **gekennzeichnet durch** das Merkmal:
- die Visierhilfe ist **durch** einen senkrechten Faden realisiert.

9. Nivelliereinrichtung nach einem der Ansprüche 1 bis 6, **gekennzeichnet durch** das Merkmal:
- die Visierhilfe ist **durch** zwei senkrechte, parallele Fäden realisiert.

10. Nivelliereinrichtung nach Anspruch 7, 8 oder 9, **gekennzeichnet durch** das Merkmal:
- an der Visierhilfe sind Höhenmarkierungen angebracht.

11. Nivelliereinrichtung nach einem der Ansprüche 1 bis 10, **gekennzeichnet durch** das Merkmal:
- es ist ein Lasersichtfilter vorgesehen, vorzugsweise an der Kimme (9, 11).

## Claims

1. A levelling device, comprising
- an elongate housing (1),
- at least one spirit level (2,3) in the housing (1) and
- a sighting means with a backsight (9,11) and a front sight (8,10),
- the backsight (9,11) and the front sight (8,10) are
mounted movably at the ends of the housing (1), **characterised by** the features:
- a laser module is accommodated in the housing (1), comprising
-- a laser beam generator,
-- a laser beam optical system (7) and
-- an actuating electronic unit,
- an on-off switch and a battery compartment are provided,
- the front sight (8,10)
-- in its retracted position, covers the laser optical system (7) and
-- is at the same time the on-off switch,
- the backsight (9,11) or the front sight (8,10) are in the form of elongate vertical sighting aids.

2. A levelling device according to Claim 1, **characterised by** the feature:
- the backsight (11) and/or the front sight (10) are in the form of slides (8,9).

3. A levelling device according to Claim 2, **characterised by** the feature:
- in its fully extended-out position, the front sight slide (8) uncovers the battery compartment.

4. A levelling device according to Claim 2, **characterised by** the feature:
- in its fully extended-out position, the backsight slide (9) uncovers the battery compartment.

5. A levelling device according to any one of Claims 1 to 4, **characterised by** the feature:
- the backsight (11) and/or front sight (10) are integrated into end caps (4,5) of the housing (1).

6. A levelling device according to any one of Claims 1 to 4, **characterised by** the feature:
- the backsight (11) and/or front sight (10) is integrated into the laser module.

7. A levelling device according to any one of Claims 1 to 6, **characterised by** the feature:
- the sighting aid takes the form of a vertical slit (10).

8. A levelling device according to any one of Claims 1 to 6, **characterised by** the feature:
- the sighting aid takes the form of a vertical thread.

9. A levelling device according to any one of Claims 1 to 6, **characterised by** the feature:
- the sighting aid takes the form of two vertical parallel threads.

10. A levelling device according to Claim 7, 8 or 9, **characterised by** the feature:
- bench marks are applied to the sighting aid.

11. A levelling device according to any one of Claims 1 to 10, **characterised by** the feature:
- a laser sight filter is provided, preferably on the backsight (9,11).

## Revendications

1. Niveau comprenant :
- un boîtier allongé longitudinalement (1),
- au moins un niveau à bulle d'air (2,3) dans le boîtier (1) et
- un instrument de visée doté d'une mire (9, 11) et d'un point de mire (8, 10),
- la mire (9, 11) et le point de mire (8, 10) étant disposés aux extrémités du boîtier (1) de manière amovible,
**caractérisé en ce que** dans le boîtier (1) est introduit un module de laser comprenant :
- un générateur de rayons laser,
- une optique pour rayons laser (7) et
- un dispositif électronique de commande,
- un interrupteur de marche-arrêt et un compartiment pour batterie sont prévus,
- le point de mire (8, 10) recouvre l'objectif laser (7) à l'état engagé et fait simultanément office d'interrupteur de marche-arrêt,
- la mire (9, 11) ou le point de mire (8, 10) sont conçus comme dispositifs d'aide verticaux pour une visée longitudinale.

2. Niveau selon la revendication 1, **caractérisé en ce que** la mire (11) et/ou le point de mire (10) sont conçus comme des coulisses (8, 9).

3. Niveau selon la revendication 2, **caractérisé en ce que** la coulisse du point de mire (8) libère le compartiment pour batterie, à l'état dégagé.

4. Niveau selon la revendication 2, **caractérisé en ce que** la coulisse de la mire (9) libère le compartiment pour batterie, à l'état dégagé.

5. Niveau selon l'une quelconque des revendications 1 à 4, **caractérisé en ce que** la mire (11) et/ou le point de mire (10) sont intégrés dans des capots d'extrémité (4, 5) du boîtier (1).

6. Niveau selon l'une quelconque des revendications 1 à 4, **caractérisé en ce que** la mire (11) et/ou le point de mire (10) sont intégrés dans le module de laser.

7. Niveau selon l'une quelconque des revendications 1 à 6, **caractérisé en ce que** le dispositif d'aide à la visée est réalisé sous forme d'une fente verticale (10).

8. Niveau selon l'une quelconque des revendications 1 à 6, **caractérisé en ce que** le dispositif d'aide à la visée est réalisé sous forme d'un fil vertical.

9. Niveau selon l'une quelconque des revendications 1 à 6, **caractérisé en ce que** le dispositif d'aide à la visée est réalisé à l'aide de deux fils parallèles verticaux.

10. Niveau selon la revendication 7, 8 ou 9, **caractérisé en ce que** des signes marquant la hauteur sont placés sur le dispositif d'aide à la visée.

11. Niveau selon l'une quelconque des revendications 1 à 10, **caractérisé en ce que** un filtre optique laser est prévu, de préférence sur la mire (9, 11).
